(19) Europäisches Patentamt
European Patent Office
Office européen des brevets

(11) **EP 1 238 503 B1**

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(21) Anmeldenummer: **00990738.7**

(22) Anmeldetag: **13.12.2000**

(51) Int Cl.[7]: **H04L 27/233**

(86) Internationale Anmeldenummer:
**PCT/EP2000/012676**

(87) Internationale Veröffentlichungsnummer:
**WO 2001/045339 (21.06.2001 Gazette 2001/25)**

(54) **VERFAHREN ZUM SCHÄTZEN DES FREQUENZVERSATZES EINES CPFSK-SIGNALS**

METHOD FOR ESTIMATING THE FREQUENCY SHIFT OF A CPFSK SIGNAL

PROCEDE D'EVALUATION DU DEPLACEMENT DE FREQUENCE D'UN SIGNAL A MODULATION PAR DEPLACEMENT DE FREQUENCE A CONTINUITE DE PHASE (CPFSK)

(84) Benannte Vertragsstaaten:
**AT BE CH CY DE DK ES FI FR GB GR IE IT LI LU MC NL PT SE TR**

(30) Priorität: **17.12.1999 DE 19961123**

(43) Veröffentlichungstag der Anmeldung:
**11.09.2002 Patentblatt 2002/37**

(73) Patentinhaber: **Infineon Technologies AG**
**81669 München (DE)**

(72) Erfinder: **NEUBAUER, André**
**47807 Krefeld (DE)**

(74) Vertreter: **Banzer, Hans-Jörg, Dipl.-Ing.**
**Kraus & Weisert**
**Patent- und Rechtsanwälte**
**Thomas-Wimmer-Ring 15**
**80539 München (DE)**

(56) Entgegenhaltungen:
- **MENGALI U. ET AL.: "SYNCHRONIZATION TECHNIQUES FOR DIGITAL RECEIVERS" 1997 , PLENUM PRESS , NEW YORK, USA XP002167756 234820 in der Anmeldung erwähnt Seite 177**
- **D'ANDREA A N ET AL: "DIGITAL CARRIER FREQUENCY ESTIMATION FOR MULTILEVEL CPM SIGNALS" PROCEEDINGS OF THE CONFERENCE ON COMMUNICATIONS (ICC), IEEE, 18. Juni 1995 (1995-06-18), Seiten 1041-1045, XP000533154 NEW YORK, USA ISBN: 0-7803-2487-0**
- **MORELLI M ET AL: "FEEDFORWARD CARRIER FREQUENCY ESTIMATION WITH MSK-TYPE SIGNALS" IEEE COMMUNICATIONS LETTERS, Bd. 2, Nr. 8, August 1998 (1998-08), Seiten 235-237, XP000778121 PISCATAWAY, USA ISSN: 1089-7798**
- **CAIRE G ET AL: "A NEW SYMBOL TIMING AND CARRIER FREQUENCY OFFSET ESTIMATION ALGORITHM FOR NONCOHERENT ORTHOGONAL M-CPFSK" IEEE TRANSACTIONS ON COMMUNICATIONS, Bd. 45, Nr. 10, Oktober 1997 (1997-10), Seiten 1314-1326, XP000723127 New YORK, USA ISSN: 0090-6778**

**Beschreibung**

Die vorliegende Erfindung betrifft ein Verfahren zum Schätzen des Frequenzversatzes eines CPFSK-Signals nach dem Oberbegriff des Anspruches 1.

Digitale Empfängersysteme für frequenz- oder phasenmodulierte Signale, insbesondere für CPFSK-Signale ("Continuous Phase Frequency Shift Keying") erfordern zur korrekten und leistungseffizienten Detektion der gesendeten Symbole neben einer Symbolsynchronisation häufig auch eine digitale Schätzung und Korrektur eines möglicherweise auftretenden Phasen- oder Frequenzversatzes.

Für eine digitale Frequenzversatzschätzung kommen heuristische Verfahren, welche bekannte Signaleigenschaften oder Eigenschaften von aus dem Empfangssignal abgeleiteten Signalen ausnutzen, sowie Verfahren, welche auf dem sogenannten ML-Prinzip ("Maximum Likelihood") basieren, zum Einsatz. Dabei wird grundsätzlich zwischen datengestützten ("data-aided") und nicht-datengestützten ("non-data-aided") sowie symboltaktgestützten ("clock-aided") und nicht-symboltaktgestützten ("non-clock-aided") Verfahren unterschieden. Zudem kann zwischen Schätzverfahren ohne Rückkopplung ("Feedforward" oder "Open Loop") und Schätzverfahren mit Rückkopplung ("Feedback" oder "Closed Loop") unterschieden werden.

In "Synchronization Techniques For Digital Receivers", U. Mengali und A.N. D'Andrea, Plenum Press, New York, 1997, ist eine Vielzahl von bekannten Verfahren zur digitalen Frequenzversatzschätzung beschrieben, wobei insbesondere ein nicht-datengestütztes, jedoch symboltaktgestütztes Schätzverfahren für MSK-Signale ("Minimum Shift Keying") vorgestellt wird, welches auf dem sogenannten "Delay-and-Multiply"-Prinzip beruht. Als wesentliche Komponente wird dabei ein differentieller Demodulator verwendet. Dieses bekannte Verfahren, welches dem Oberbegriff des Anspruches 1 entspricht, soll nachfolgend etwas ausführlicher erläutert werden.

Bei diesem bekannten Verfahren wird zunächst davon ausgegangen, daß ein MSK-Empfangssignal r(t) zur Rauschbegrenzung gefiltert und das daraus resultierende gefilterte MSK-Empfangssignal x(t) zu bestimmten Abtastzeitpunkte kT+τ abgetastet wird, wobei k den Abtastindex, T die Symboldauer des Empfangssignals und τ eine Verzögerungskonstante bezeichnet. Wie näher in "Synchronization Techniques For Digital Receivers", U. Mengali und A. N. D'Andrea, Plenum Press, New York, 1997, beschrieben ist, kann aus der gefilterten und abgetasteten komplexen Einhüllenden $x(k \cdot T + \tau)$ des Empfangssignals (sowie dem entsprechenden konjugiert-komplexen Signal $x * (k \cdot T + \tau)$) ein Zwischensignal $z(k \cdot T + \tau)$ wie folgt abgeleitet werden:

$$z(k \cdot T + \tau) = x^2(k \cdot T + \tau) \cdot \{x^2([k - 1] \cdot T + \tau)\}^* = \{x(k \cdot T + \tau) \cdot x * ([k - 1] \cdot T + \tau)\}^2$$

Aus diesem Zwischensignal ergibt sich dann der Schätzwert für den Frequenzversatz ν durch Auswertung eines $L_0$ Empfangssymbole umfassenden Beobachtungsintervalls:

$$\nu = -\frac{1}{4\pi T} \cdot \arg\{z(\tau) + z(T + \tau) + z(2 \cdot T + \tau) + \ldots + z([L_0 - 1] \cdot T + \tau)\} = -\frac{1}{4\pi T} \cdot \arg\{\sum_{k=0}^{L_0-1} z(k \cdot T + \tau)\}$$

Wie bereits erwähnt worden ist, handelt es sich bei dem oben beschriebenen Verfahren jedoch um ein für MSK-Empfangssignale entwickeltes Modell. Bei der MSK-Modulation wird die Trägerphase während der Dauer T eines Symboles um den Betrag $\pm \frac{\pi}{2}$ gedreht, so daß die Frequenz des Sendesignals abhängig von dem zu sendenden Symbol zwischen $\bar{\omega}_0 + \frac{\pi}{2 \cdot T}$ und $\bar{\omega}_0 - \frac{\pi}{2 \cdot T}$ wechselt, wobei $\bar{\omega}_0$ die Nominal-Trägerfrequenz bezeichnet.

Bei winkelmodulierten Signalen wird die Phase des Trägersignals in Übereinstimmung mit einer Phasenfunktion q(t) eines entsprechenden Phasenfilters verändert. Für MSK-Signale ist die Phasenfunktion wie folgt definiert:

$$q(t) = \begin{cases} 0 & t < 0 \\ \dfrac{t}{T} & 0 \leq t < T \\ 1 & t > T \end{cases}$$

Die Phasenfunktion q(t) nimmt somit nach der Dauer T eines Sendesymbols seinen Endwert an.

CPFSK-Signale besitzen jedoch im allgemeinen gegenüber MSK-Signalen eine Phasenfunktion, die erst nach

einem Zeitintervall $L \cdot T$ mit L > 1 ihren Endwert erreichen, d.h. die Phasenfunktion q(t) ist für CPFSK-Signale wie folgt definiert:

$$q(t) = \begin{cases} 0 & t < 0 \\ q(t) & 0 \leq t < L \cdot T \\ 1 & t > L \cdot T \end{cases}$$

In D'Andrea et al.: "Digital Carrier Frequency Estimation for Multilevel CPM Signals", Proceedings of the Conference on Communications, IEEE 1995, S.1041-1045, ist ein Verfahren zur Schätzung eines Frequenzversatzes von CPM - Signalen offenbart.

Der vorliegenden Erfindung liegt ausgehend von dem zuvor beschriebenen Stand der Technik die Aufgabe zugrunde, ein für CPFSK-Signale allgemein gültiges Verfahren zum Schätzen des Frequenzversatzes bereitzustellen.

Diese Aufgabe wird erfindungsgemäß durch ein Verfahren mit den Merkmalen des Anspruches 1 gelöst. Die Unteransprüche definieren bevorzugte und vorteilhafte Ausführungsbeispiele der vorliegenden Erfindung.

Erfindungsgemäß wird zum Schätzen des Frequenzversatzes eines CPFSK-Signals ein ganzzahliger Verzögerungsparameter D eingeführt, der abhängig von der Art des CPFSK-Signals bzw. der jeweils gewählten Modulationsart geeignet eingestellt werden kann.

Das CPFSK-Signal wird zu Zeitpunkten $k \cdot T + \tau$ abgetastet, wobei T die Abtastperiode, k einen Abtastindex und $\tau$ eine Verzögerungskonstante bezeichnet. Davon abhängig werden für die Zeitpunkte $k \cdot T + \tau$ Zwischensignalwerte jeweils aus den zu den Zeitpunkten $k \cdot D \cdot T + \tau$ und $[k - 1] \cdot D \cdot T + \tau$ gewonnenen Abtastwerten des CPFSK-Signals ermittelt. Der Schätzwert für den Frequenzversatz wird schließlich aus einer Anzahl von $L_0$ zuvor für die Zeitpunkte $i \cdot D \cdot T + \tau$ ($i = 0...L_0-1$) ermittelten Zwischensignalwerten gewonnen.

Insbesondere kann der Schätzwert für den Frequenzversatz durch die Berechnung des Ausdrucks

$$\frac{1}{4 \cdot \pi \cdot D \cdot T} \cdot \arg\left\{ \sum_{i=0}^{L_0-1} z(i \cdot D \cdot T + \tau) \right\}$$

ermittelt werden, wobei $z(i \cdot D \cdot T + \tau)$ den für den Zeitpunkt $i \cdot D \cdot T + \tau$ ermittelten Zwischensignalwert bezeichnet.

Das erfindungsgemäße Schätzverfahren ist allgemein für CPFSk-Signale gültig und ist zudem aufwandsgünstig zu implementieren. Darüber hinaus können auch für kurze Beobachtungszeiten, d.h. für geringe Werte von $L_0$, sehr gute Schätzergebnisse erzielt werden.

Die Erfindung wird nachfolgend näher unter Bezugnahme auf die beigefügte Zeichnung erläutert.

Fig. 1 zeigt den prinzipiellen Aufbau einer Anordnung zum Schätzen des Frequenzversatzes eines Signals, und

Fig. 2 zeigt zur Verdeutlichung der Vorteile der vorliegenden Erfindung eine Darstellung des gemittelten und unter Anwendung eines erfindungsgemäßen Verfahrens geschätzten Frequenzversatzes gegenüber dem tatsächlichen Frequenzversatz.

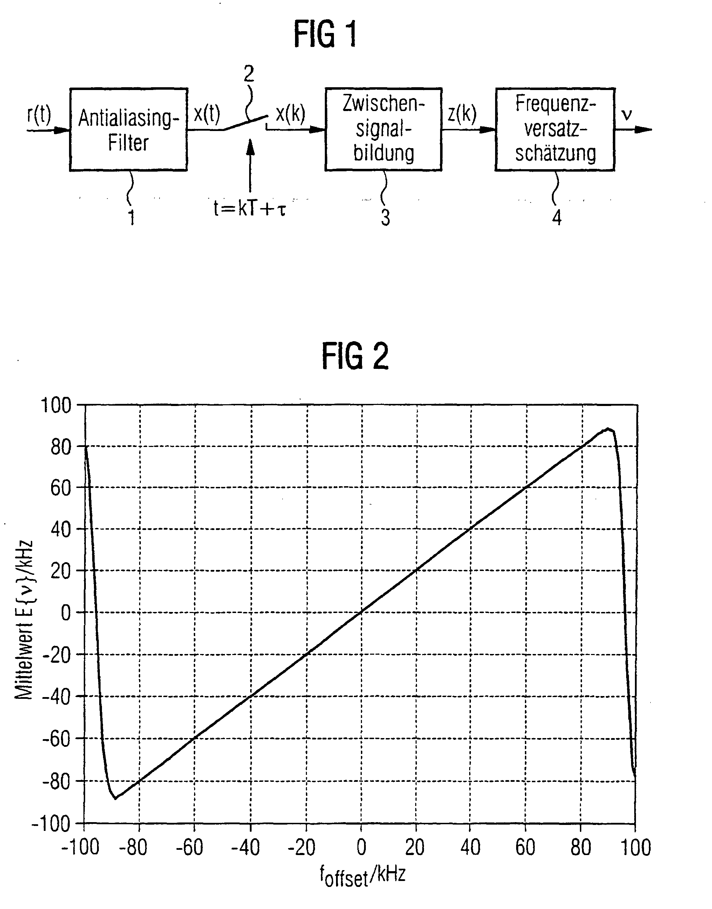

In Fig. 1 ist eine Anordnung zum Schätzen des Frequenzversatzes oder Frequenzoffsets $\nu$ eines von einem digitalen Empfänger empfangenen Signals r(t) dargestellt.

Da das Empfangssignal r(t) neben einem Nutzsignalanteil auch einen Rauschanteil aufweist, wird das Empfangssignal r(t) zunächst einem Antialiasing-Filter, welches in der Regel durch ein Tiefpaßfilter gebildet ist, zugeführt, um das Rauschen so weit wie möglich zu unterdrücken. Das daraus resultierende gefilterte Empfangssignal x(t) wird anschließend in einer Einrichtung 2 mit dem Symboltakt 1/T und einer Verzögerungskonstante $\tau$ abgetastet. Aus dem gefilterten und abgetasteten Empfangssignal x(k) wird anschließend mit Hilfe einer als differentieller Modulator wirkenden Einrichtung 3 ein Zwischensignal z(k) gewonnen, welches als Grundlage für die Schätzung des Frequenzversatzes $\nu$ durch eine Schätzeinrichtung 4 ist.

Das von der Schätzeinrichtung 4 zur Schätzung der Frequenzversatzes ausgeführte Verfahren soll nachfolgend näher erläutert werden.

Obwohl das Empfangssignal r(t) zur Rauschunterdrückung dem Filter 1 zugeführt worden ist, weist das daraus resultierende gefilterte Empfangssignal x(t) neben dem eigentlichen Nutzsignalanteil auch noch einen Restrauschanteil auf. Für die komplexe Einhüllende des gefilterten und abgetasteten Empfangssignals gilt somit:

$$x(k \cdot T + \tau) = s(k \cdot T + \tau) + n(k \cdot T + \tau)$$

Dabei bezeichnet $s(k \cdot T + \tau)$ den Nutzsignalanteil und $n(k \cdot T + \tau)$ den Restrauschanteil. Der Nutzsignalanteil $s(k \cdot T + \tau)$ eines komplexen CPFSK-Signals ist wie folgt definiert:

$$s(k \cdot T + \tau) = e^{j[2 \cdot \pi \cdot \nu \cdot (k \cdot T + r) + \theta]} \cdot \sqrt{\frac{2 \cdot E_h}{T}} \cdot e^{J\psi(k \cdot T, <\alpha_i>)}$$

Dabei bezeichnet $\nu$ den zu schätzenden Frequenzversatz, während $\theta$ einen unbekannten Phasenversatz bezeichnet. Des weiteren bezeichnet $E_b$ die Bitenergie jedes gesendeten Bits und $\psi(k \cdot T, < \alpha_k >)$ den Phasenwinkel zum Zeitpunkt $k \cdot T$. Der Phasenwinkel ist von den jedem Sendesymbol zugewiesenen Phasenänderungen $\alpha_i$ und dem Modulationsindex $\eta$ wie folgt abhängig:

$$\psi(k \cdot T, < \alpha_k >) = \pi \cdot \eta \cdot \sum_{i=0}^{k-1} \alpha_i$$

Aus der abgetasteten komplexen Einhüllenden $x(k \cdot T + \tau)$ und deren Konjugiert-Komplexen $x^*(k \cdot T + \tau)$ wird das Zwischensignal $z(k \cdot T + \tau)$ folgendermaßen berechnet, wobei für CPFSK-Signale ein Verzögerungsparameter D eingeführt wird, der beispielsweise für MSK-Signale den Wert D = 1 besitzt:

$$z(k \cdot T + \tau) = x^2(k \cdot D \cdot T + \tau) \cdot [x^2([k - 1] \cdot D \cdot T + \tau)]^* = \{x(k \cdot D \cdot T + \tau) \cdot x^*([k - 1] \cdot D \cdot T + \tau)\}^2$$

Über einen Beobachtungszeitraum mit $L_0$ Werten des somit ermittelten Zwischensignals $z(k \cdot T + \tau)$ ergibt sich der geschätzte Frequenzversatz $\nu$ zu

$$\nu = \frac{1}{4 \cdot \pi \cdot D \cdot T} \cdot \arg\{z(\tau) + z(D \cdot T + \tau) + z(2 \cdot D \cdot T + \tau) + \ldots + z([L_0 - 1] \cdot D \cdot T + \tau)\} =$$

$$= \frac{1}{4 \cdot \pi \cdot D \cdot T} \cdot \arg\{\sum_{i=0}^{L_0-1} z(i \cdot D \cdot T + \tau)\}$$

Durch die Einführung des Verzögerungsparameters D wird somit eine für CPFSK-Signale allgemein gültige Formel zur Schätzung des Frequenzversatzes $\nu$ erhalten. Für die Schätzung des Frequenzversatzes $\nu$ eines CPFSK-Signals (L > 1) ist ein möglicher Wert des Verzögerungsparameters D beispielsweise D = L, wobei L die Anzahl der Symbole angibt, bis die entsprechende Phasenfunktion q(t) ihren Endwert erreicht hat (vgl. die obigen Ausführungen).
In Fig. 2 ist der gemittelte und unter Anwendung des erfindungsgemäßen Verfahrens geschätzten Frequenzversatz $\nu$ gegenüber dem tatsächlichen Frequenzversatz $f_{offset}$ aufgetragen. Dabei handelt es sich um die Ergebnisse einer für ein GMSK-Signal ("Gaussian Minimum Shift Keying") mit einem Signal-Rausch-Abstand von 12dB und einem Modulationsindex $\eta = 0{,}5$ durchgeführten Simulation. Der Filter 1 wies eine Bandbreite von $B \cdot T = 0{,}5$ auf, während für den Verzögerungsparameter der Wert D = 3 gewählt wurde. Des weiteren wurde zum Schätzen des Frequenzversatzes $\nu$ von einem Beobachtungsintervall der Länge Lo = 32 ausgegangen. Der Darstellung von Fig. 2 kann entnommen werden, daß mit Hilfe des erfindungsgemäßen Verfahrens auch bei relativ kurzen Beobachtungsintervallen sehr gute Schätzergebnisse erzielt werden können.
Das erfindungsgemäße Schätzverfahren läßt sich beispielsweise einfach mit Hilfe einer nachfolgend mit "DM_CA_Frequency" bezeichneten Matlab-Funktion implementieren, welche mit den Parametern x, T, D und $L_0$ aufgerufen wird und als Ergebnis f den geschätzten Wert für den Frequenzversatz liefert:

function [f] = DM_CA_Frequency(x,T,D,L0)

z = (x(1:D:L0). * conj(x(1+D:D:L0+D))}. ^2;
f = -angle(-sum(z))/(4*pi*D*T);

Innerhalb der Funktion wird zunächst die Hilfsvariable z des differentiellen Modulators bzw. der Einrichtung 3 (vgl. Fig. 1) definiert, ehe anschließend daraus durch eine Summenbildung über $L_0$ Werte der Hilfsvariable z der Schätzwert für den Frequenzversatz ermittelt wird.

**Patentansprüche**

1. Verfahren zum Schätzen des Frequenzversatzes eines CPFSK-Signals, umfassend die Schritte:

   a) Abtasten des CPFSK-Signals,
   b) Ermitteln von Zwischensignalwerten für das im Schritt a) abgetastete CPFSK-Signals, und
   c) Ermitteln eines Schätzwerts (v) für den Frequenzversatz des CPFSK-Signals durch Auswertung einer bestimmten Anzahl von $L_0$ aufeinanderfolgenden und im Schritt b) ermittelten Zwischensignalwerten,

   wobei ein ganzzahliger Verzögerungsparameter D vorgegeben wird,
   wobei im Schritt b) Zwischensignalwerte für die Zeitpunkte $k \cdot T + \tau$ jeweils aus den im Schritt a) zu den Zeitpunkten $k \cdot D \cdot T + \tau$ und $[k - 1] \cdot D \cdot T + \tau$ gewonnenen Abtastwerten des CPFSK-Signals ermittelt werden, wobei T eine Abtastperiode, mit der das CPFSK-Signal im Schritt a) abgetastet wird, k einen Abtastindex und $\tau$ eine Verzögerungskonstante bezeichnet, und wobei im Schritt c) der Schätzwert (v) für den Frequenzversatz aus den somit im Schritt b) für die Zeitpunkte $i \cdot D \cdot T + \tau$ mit i = 0...$L_0$-1 gewonnenen Zwischensignalwerten ermittelt wird,
   **dadurch gekennzeichnet,**
   **dass** der ganzzahlige Verzögerungsparameter D variabel ist und in Abhängigkeit von der Art der für das CPFSK-Signal verwendeten CPFSK-Modulation gewählt wird,
   **daß** die Phase des CPFSK-Signals bei dessen Modulation in Übereinstimmung mit einer bestimmten Phasenfunktion verändert wird, wobei die Phasenfunktion ihren Endwert nach einer bestimmten Anzahl L von Symbolen des CPFSK-Signals erreicht,
   **daß** für den Verzögerungsparameter der Wert D = L gewählt wird, und
   **daß** die dem CPFSK-Signal zugeordnete Phasenfunktion derart ist, daß L > 1 gilt.

2. Verfahren nach Anspruch 1,
   **dadurch gekennzeichnet,**
   **daß** das im Schritt a) abgetastete CPFSK-Signal $x(k \cdot T + \tau)$ in komplexer Form vorliegt,
   **daß** im Schritt b) die Zwischensignalwerte $z(k \cdot T + \tau)$ gemäß der Beziehung $z(k \cdot T + \tau) = \{x(k \cdot D \cdot T + \tau) \cdot x^*([k - 1] \cdot D \cdot T + \tau)\}^2$ ermittelt werden, wobei x* die konjungiert-komplexe Form des CPFSK-Signals bezeichnet, und
   **daß** im Schritt c) der Schätzwert v für den Frequenzversatz gemäß der Beziehung

$$v = \frac{1}{4 \cdot \pi \cdot D \cdot T} \cdot \arg\{\sum_{i=0}^{L_0-1} z(i \cdot D \cdot T + \tau)\}$$

   ermittelt wird.

3. Verfahren nach einem der vorhergehenden Ansprüche,
   **dadurch gekennzeichnet,**
   **daß** das CPFSK-Signal vor seiner Abtastung im Schritt a) tiefpaßgefiltert wird.

4. Verfahren nach einem der vorhergehenden Ansprüche,
   **dadurch gekennzeichnet,**
   **daß** das CPFSK-Signal ein in einem digitalen Funksystem, insbesondere einem digitalen Mobilfunksystem, übertragenes Sendesignal ist, und
   **daß** das Verfahren zum Schätzen des Frequenzversatzes (v) des CPFSK-Signals in einem Empfänger des digitalen Funksystems durchgeführt wird, um abhängig von dem geschätzen Frequenzversatz (v) das empfangene CPFSK-Signal entsprechend zu korrigieren.

**Claims**

1. Method for estimating the frequency shift of a CPFSK signal, which includes the steps:

   a) scanning of the CPFSK signal,
   b) determination of intermediate signal values for the CPFSK signal scanned in step a), and
   c) determination of an estimated value (v) for the frequency shift of the CPFSK signal by assessing a predefined number of $L_0$ consecutive intermediate signal values obtained in step b),

   whereby an integer delay parameter D is specified,
   whereby in step b) intermediate signal values for the intervals $k\,T+\tau$ are determined in each case from the scanning values of the CPFSK signal obtained for the intervals $k\cdot D\cdot T+\tau$ and $[k\text{-}1]\cdot D\cdot T+\tau$, whereby T designates a scanning period, with which the CPFSK signal is scanned in step a), k a scanning index and $\tau$ a delay constant, and whereby in step c) the estimated value (v) for the frequency shift is determined from the intermediate signal values thus obtained in step b) for the intervals $i\cdot D\cdot T+\tau$ with i = 0 ...$L_0$-1 , **characterised in that** the integer delay parameter D is variable and is selected depending on the type of CPFSK modulation used for the CPFSK signal,
   **in that** the phase of the CPFSK signal during its modulation is changed in harmony with a predetermined phase function,
   whereby the phase function reaches its end value after a predetermined number L of symbols of the CPFSK signal,
   **in that** the value D = L is selected for the delay parameter, and
   **in that** the phase function allocated to the CPFSK signal is such that L > 1 applies.

2. Method according to claim 1, **characterised in that** the CPFSK signal $x(k\cdot T+\tau)$ scanned in step a) is present in complex form, and
   **in that** in step b) the intermediate signal values $z(k\cdot T+\tau)$ are determined according to the equation $z(k\cdot T+\tau)=\{x(k\cdot D\cdot T+\tau)\cdot x^*([k\text{-}1]\cdot D\cdot T+\tau))^2$, whereby $x^*$ designates the conjugated complex form of the CPFSK signal, and
   **in that** in step c) the estimated value v for the frequency shift is determined according to the equation

$$\nu = \frac{1}{4\cdot\pi\cdot D\cdot T}\cdot\arg\{\sum_{i=0}^{L_0-1} z(i\cdot D\cdot T+\tau)\}$$

.

3. Method according to any one of the preceeding claims, **characterised in that** the CPFSK signal is passed through a low-pass filter before being scanned in step a).

4. Method according to any one of the preceeding claims, **characterised in that** the CPFSK signal is a transmitted signal sent over a digital radio system, in particular a digital mobile radio system, and
   **in that** the method for estimating the frequency shift (v) of the CPFSK signal is carried out in a receiver of the digital radio system, in order to correct the incoming CPFSK signal accordingly, depending on the estimated frequency shift (v).

**Revendications**

1. Procédé d'estimation du décalage de fréquence d'un signal CPFSK,
   comprenant les étapes :

   a) échantillonnage du signal CPFSK,
   b) détermination de valeurs de signal intermédiaire pour le signal CPFSK échantillonné à l'étape a), et
   c) détermination d'une valeur estimée (v) pour le décalage de fréquence du signal CPFSK par évaluation d'un certain nombre $L_0$ de valeurs de signal intermédiaire successives et déterminées à l'étape b),

   un paramètre de retard D entier étant prescrit,
   à l'étape b), des valeurs de signal intermédiaire étant déterminées pour les instants $k\cdot T+\tau$ à chaque fois à partir des valeurs échantillonnées du signal CPFSK qui ont été obtenues à l'étape a) aux instants $k\cdot D\cdot T+\tau$ et $[k-1]\cdot D\cdot T+\tau$, T étant une période d'échantillonnage avec laquelle le signal CPFSK est échantillonné à l'étape a), k étant un indice d'échantillonnage et $\tau$ étant une constante de retard, et
   à l'étape c), la valeur estimée (v) pour le décalage de fréquence étant déterminée à partir des valeurs de signal intermédiaire ainsi obtenues à l'étape b) pour les instants $i \cdot D \cdot T + \tau$ avec $i = 0 \dots L_0 - 1$,

**caractérisé par le fait que**

le paramètre de retard D entier est variable et est choisi en fonction du type de la modulation CPFSK utilisée pour le signal CPFSK,

la phase du signal CPFSK est modifiée lors de la démodulation de celui-ci conformément à une fonction de phase déterminée, la fonction de phase atteignant sa valeur finale après un certain nombre L de symboles du signal CPFSK,

la valeur D = L est choisie pour le paramètre de retard, et

la fonction de phase associée au signal CPFSK est telle que L > 1.

2. Procédé selon la revendication 1,

**caractérisé par le fait que**

le signal CPFSK $x (k \cdot T + \tau)$ échantillonné à l'étape a) est présent sous forme complexe,

à l'étape b), les valeurs de signal intermédiaire $z (k \cdot T + \tau)$ sont déterminées selon la relation $z (k \cdot T + \tau) = \{x (k \cdot D \cdot T + \tau) \cdot x^* ([k - 1] \cdot D \cdot T + \tau) \}^2$, x* étant la forme conjuguée complexe du signal CPFSK, et

à l'étape c), la valeur estimée v pour le décalage de fréquence est déterminée selon la relation v =

$$\frac{1}{4 \cdot \pi \cdot D \cdot T} \cdot \text{arg} \left\{ \sum_{i=0}^{L_0-1} z (i \cdot D \cdot T + \tau) \right\}.$$

3. Procédé selon l'une des revendications précédentes,

**caractérisé par le fait que**

le signal CPFSK traverse un filtre passe-bas avant son échantillonnage à l'étape a).

4. Procédé selon l'une des revendications précédentes,

**caractérisé par le fait que**

le signal CPFSK est un signal d'émission transmis dans un système radio numérique, en particulier dans un système de radiocommunication mobile numérique, et

le procédé d'estimation du décalage de fréquence (v) du signal CPFSK est exécuté dans un récepteur du système radio numérique pour corriger le signal CPFSK reçu en fonction du décalage de fréquence estimé (v).

# FIG 1

r(t) → | Antialiasing-Filter | x(t) → /2 x(k) → | Zwischen-signal-bildung | z(k) → | Frequenz-versatz-schätzung | → ν

1

$t = kT + \tau$

3

4

# FIG 2